# EUROPÄISCHE PATENTSCHRIFT

(11) **EP 2 185 295 B1**
(45) Veröffentlichungstag und Bekanntmachung des Hinweises auf die Patenterteilung: **02.01.2013**
(21) Anmeldenummer: 08801604.3
(22) Anmeldetag: 18.08.2008
(51) Int. Cl.: B05D 3/06, B29C 37/00, B32B 27/40, C09D 175/16

(54) **LACK, FLEXIBLER SCHICHTVERBUND MIT EINEM TRÄGER UND EINER DARAUF AUFGEBRACHTEN LACKSCHICHT SOWIE DEREN VERWENDUNG**
SURFACE-COATING MATERIAL, FLEXIBLE LAMINATE WITH A SUBSTRATE AND A LAYER OF SURFACE-COATING MATERIAL APPLIED THERETO, AND USE THEREOF
VERNIS, COMPOSITE STRATIFIÉ SOUPLE PRÉSENTANT UN SUPPORT ET UNE COUCHE DE VERNIS APPLIQUÉE SUR CE SUPPORT, ET LEUR UTILISATION

(30) Priorität: 20.08.2007 DE 102007040376
(43) Veröffentlichungstag der Anmeldung: 19.05.2010
(60) Teilanmeldung: 12151858.3
(73) Patentinhaber: KARL WÖRWAG LACK- UND FARBENFABRIK GMBH & CO. KG, 70435 Stuttgart (DE)
(72) Erfinder: DJUNAIDI, Terry, 71229 Leonberg (DE); WARTA, Helge, 71245 Ditzingen (DE)
(74) Vertreter: Patentanwälte Ruff, Wilhelm, Beier, Dauster & Partner
(86) Internationale Anmeldenummer: PCT/EP2008/006765
(87) Internationale Veröffentlichungsnummer: WO 2009/024310

(56) Entgegenhaltungen:
- EP-A- 0 361 351
- WO-A-2005/080484
- WO-A-2005/099943
- DE-A-102005 049 520

## Beschreibung

Die vorliegende Erfindung betrifft einen Lack mit einer doppelbindungshaltigen, OH-funktionellen Komponente A, einer doppelbindungshaltigen, NCO-funktionellen Komponente B und einer doppelbindungshaltigen Komponente C, einen Schichtverbund mit einem solchen Lack, die Verwendung des Lacks und des Schichtverbunds bei der Herstellung lackierter Substrate und ein Lackierverfahren.

Aus der Automobilfertigung ist es bekannt, an Stelle konventioneller Lackierungen mehrschichtige Verbünde mit einer auf einen Träger aufgebrachten Schicht härtbaren Lackes zur Beschichtung von Karosserieteilen zu verwenden. Insbesondere sogenannte Lackfolien, bei denen es sich bei dem Träger um eine Folie handelt, sind hier zu nennen. Bei der Applikation dieser Lackfolien entsteht eine Lackierung mit einem substrat- und verfahrensunabhängigen Farbton, was das Farbqualitätsmanagement erheblich vereinfachen kann. Ein weiterer Vorteil bei der Verwendung von Lackfolien liegt darin, dass bei ihrer Applikation praktisch keine Lösungsmittelemissionen auftreten. Für den Automobilbereich geeignete Lackfolien sind beispielsweise aus der WO 00/13893, der EP 361 351 und der EP 0 819 520 bekannt.

Aus der DE 10 2004 055363 sind Lackfolien mit einem Träger und mindestens einer auf den Träger aufgebrachten Schicht härtbaren Lackes bekannt, wobei die Schicht härtbaren Lackes ein doppelbindungshaltiges Bindemittel mit einer Doppelbindungsdichte zwischen 3 mol/kg und 6 mol/kg, einer Glasübergangstemperatur T_{g} zwischen -15 °C und 20 °C und mit einem Festkörperanteil zwischen 40 % und 100 % aufweist. Die Schicht härtbaren Lackes ist nach thermischer Trocknung nicht klebrig. Vorzugsweise ist auf der Schicht härtbaren Lackes mindestens eine entfernbare Schutzschicht, vorzugsweise eine entfernbare Schutzfolie, aufgebracht.

Lackfolien mit einem polyurethanbasierten Lack sind aus der EP 1 790 673 A1 bekannt. Die EP 1 138 710 betrifft mehrkomponentige Lacke auf Basis von Urethanacrylaten.

Der vorliegenden Erfindung lag die Aufgabe zugrunde, durch Weiterentwicklung bekannter Lackfolientechnologien neue technische Lösungen bereitzustellen, die das Lackieren von Substraten weiter vereinfachen sollen. Besonderes Augenmerk war dabei auf die Bereitstellung einer neuen Lackzusammensetzung gerichtet, die sich flexibel einsetzen lässt und sich insbesondere zur Herstellung von Lackfolien eignet.

Zur Lösung dieser Aufgabe schlägt die Erfindung einen Lack mit den Merkmalen der Ansprüche 1 und 4 vor. Bevorzugte Ausführungsformen des erfindungsgemäßen Lacks gemäß Anspruch 1 sind in den abhängigen Ansprüchen 2 und 3 beschrieben. Ein Substrat und ein flexibler Schichtverbund, die jeweils einen erfindungsgemäßen Lack aufweisen, sind Gegenstand der Ansprüche 5 und 6. Bevorzugte Ausführungsformen des erfindungsgemäßen Schichtverbunds sind in den abhängigen Ansprüchen 7 bis 10 beschrieben. Auch die Verwendungen des erfindungsgemäßen Lacks und des erfindungsgemäßen Schichtverbunds gemäß dem Anspruch 11 sind Gegenstand dieser Erfindung. Ebenfalls Erfindungsgegenstand sind die Verfahren mit den Merkmalen der Ansprüche 12 und 14. Eine bevorzugte Ausführungsform des erfindungsgemäßen Verfahrens mit den Merkmalen des Anspruchs 12 findet sich im abhängigen Anspruch 13.

Ein erfindungsgemäßer Lack umfasst eine doppelbindungshaltige, OH-funktionelle Komponente A, eine doppelbindungshaltige, NCO-funktionelle Komponente B und ggf. eine doppelbindungshaltige Komponente C, die von A und B verschieden ist. Die drei Komponenten weisen die folgenden Eigenschaften auf:

### Komponente A

- Festkörperanteil zwischen 30 Gew.-% und 100 Gew.-%,
- Doppelbindungsdichte zwischen 2 mol/kg und 5 mol/kg, insbesondere zwischen 3 mol/kg und 4 mol/kg (bei einem Festkörperanteil von 100 %) und
- OH-Gehalt zwischen 4 Gew.-% und 7 Gew.-%

### Komponente B

- Festkörperanteil zwischen 30 Gew.-% und 100 Gew.-%,
- Doppelbindungsdichte zwischen 1 mol/kg und 4 mol/kg, insbesondere zwischen 1 mol/kg und 2 mol/kg (bei einem Festkörperanteil von 100 %) und
- NCO-Gehalt zwischen 4 Gew.-% und 7 Gew.-%

### Komponente C

- Glasübergangstemperatur T_{g} zwischen -10 °C und 20 °C, insbesondere zwischen -5 °C und 5 °C,
- Festkörperanteil zwischen 30 Gew.-% und 100 Gew.-% und
- Doppelbindungsdichte zwischen 3 mol/kg und 6 mol/kg, insbesondere zwischen 4 mol/kg und 4,5 mol/kg (bei einem Festkörperanteil von 100 %)

Die Komponente A weist bevorzugt eine Glasübergangstemperatur T_{g} zwischen 8 °C und 20 °C, insbesondere zwischen 12 °C und 15 °C, auf. Die Komponente B weist bevorzugt eine Glasübergangstemperatur T_{g} zwischen 0 °C und 10 °C, insbesondere zwischen 3 °C und 8 °C, auf.

Jede der Komponenten kann einen Anteil Lösungsmittel aufweisen (bis zu 70 Gew.-%, s.o.). Daneben kann dem erfindungsgemäßen Lack noch mindestens ein zusätzliches Lösungsmittel zugesetzt sein.

Als fakultativen Bestandteil kann ein erfindungsgemäßer Lack weiterhin ein oder mehrere Lack-Hilfsmittel, vorzugsweise eine Lack-Hilfsmittelkombination, aufweisen. Geeignete Lack-Hilfsmittel werden weiter unten noch beschrieben.

In Weiterbildung weist ein erfindungsgemäßer Lack bevorzugt die folgende Zusammensetzung auf:
- zwischen 5 Gew.-% und 15 Gew.-% Komponente A,
- zwischen 10 Gew.-% und 45 Gew.-% Komponente B,
- zwischen 0 Gew.-% und 35 Gew.-% Komponente C,
- zwischen 0 Gew.-% und 8 Gew.-% des mindestens einen Lack-Hilfsmittels und
- zwischen 0 Gew.-% und 50 Gew.-% Lösungsmittel

Es bleibt anzumerken, dass sich die Anteile zu 100 Gew.-% ergänzen.

Bei dem mindestens einen zusätzlichen Lösungsmittel handelt es sich insbesondere um ein organisches Lösemittel. In bevorzugten Ausführungsformen umfasst es mindestens einen Ester und/oder mindestens ein Keton. Besonders geeignet sind beispielsweise Butylacetat oder Methylisobutylketon (MIBK).

Bei Komponente A handelt es sich insbesondere um ein Bindemittel auf Basis eines doppelbindungshaltigen Polyols. Bevorzugt sind doppelbindungshaltige Polyole mit einem mittleren Molekulargewicht Mn zwischen 1000 Da und 10000 Da.

Komponente B basiert bevorzugt auf einem aliphatischen Urethanacrylat. Urethanacrylate mit einem mittleren Molekulargewicht Mn zwischen 1000 Da und 10000 Da sind besonders bevorzugt.

Als Komponente C wird besonders bevorzugt ein Bindemittel auf Basis eines Urethanacrylats eingesetzt, wobei das Urethanacrylat insbesondere ein mittleres Molekulargewicht Mn zwischen 1000 Da und 3000 Da, insbesondere zwischen 1400 Da und 2000 Da, aufweist.

Bei dem oben bereits angesprochenen mindestens einen Lack-Hilfsmittel kann es sich um jedes handelsübliche Hilfsmittel handeln, das bei der Herstellung von Lacken (abgesehen von den Lackrohstoffen) üblicherweise benötigt wird, insbesondere um Hilfsmittel, die zur Einstellung und Stabilisierung der Eigenschaften von Lacken dienen. Beispiele hierfür sind Photoinitiatoren wie z. B. α-Hydroxyalkylphenone oder Acylphosphinoxide, Lichtschutzmittel wie handelsübliche UV-Absorber wie Hydroxybenzophenone, Benzotriazole, Oxalanilide und Radikalfänger wie sterisch gehinderte Amine (HALS), Oberflächenadditive wie Verlaufsmittel und Entschäumer, Emulgatoren und Netz- und Dispergiermittel.

In einigen bevorzugten Ausführungsformen kann ein erfindungsgemäßer Lack Pigmente und/oder Füllstoffe aufweisen. Als Pigmente können sowohl anorganische als auch organische Pigmente zugesetzt sein. Als Füllstoffe kommen alle dem Fachmann bekannte entsprechende Zusätze wie z.B. Kieselgele oder Talkum in Betracht. Vorzugsweise handelt es sich bei der Schicht härtbaren Lackes aber um einen Klarlack.

Jeglicher gehärtete oder teilgehärtete Lack, der durch Härtung oder Teilhärtung eines erfindungsgemäßen Lacks hergestellt oder herstellbar ist sowie jedes Substrat, das mindestens teilweise mit einem erfindungsgemäßen Lack beschichtet ist, wird ebenfalls von der vorliegenden Erfindung umfasst.

Ein erfindungsgemäßer gehärteter Lack weist eine hohe Resistenz gegenüber Chemikalien wie z. B. Schwefelsäure oder Natronlauge auf. Auch Fermente wie Pankreatin führen in der Regel nicht zu einer Schädigung der Lackoberfläche. Er ist außerordentlich bewitterungsstabil und gut geeignet für Außenanwendungen. Darüber hinaus verfügt ein erfindungsgemäßer gehärteter Lack über hervorragende mechanische Eigenschaften, insbesondere über eine hohe Kratzbeständigkeit. Der Glanzgrad ist zwischen matt und hochglänzend beliebig einstellbar, worauf später noch eingegangen wird.

Neben dem beschriebenen Lack ist ein flexibler Schichtverbund mit einem Träger und mindestens einer auf den Träger aufgebrachten Lackschicht aus dem erfindungsgemäßen Lack Gegenstand der vorliegenden Erfindung.

In einer bevorzugten Ausführungsform weist ein erfindungsgemäßer Schichtverbund als Träger eine Folie, insbesondere eine einschichtige Folie oder mehrschichtige Verbundfolie auf.

Besonders bevorzugt besteht der Träger im wesentlichen aus Kunststoff, insbesondere aus Fluorpolymeren wie Ethylen-Tetrafluorethylen (ETFE), Polyethylenterephthalat, Polyolefin, Polycarbonat, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/ Polycarbonat (ASA/PC), Polyacrylat, Polystyrol, Polycarbonat/Polybutylenterephthalat (PC/PBT) und/oder Polymethylmethacrylat.

Vor dem Aufbringen der mindestens einen Lackschicht auf den Träger kann die Oberfläche des Trägers einer aktivierenden Vorbehandlung, beispielsweise einer Corona-Behandlung, unterzogen werden.

Besonders vorteilhaft kann es sein, den Träger derart auszugestalten, dass er licht- und/oder UV-durchlässig ist. Derart ausgestaltet ist es dann beispielsweise möglich, unter oder auf dem Träger liegende Schichten durch den Träger hindurch zu belichten bzw. zu bestrahlen.

Vorzugsweise wird als Träger eine Folie mit einer Dicke im Bereich zwischen 10 µm und 1500 µm, insbesondere zwischen 10 µm und 200 µm, gewählt.

In manchen Fällen kann es bevorzugt sein, dass der Träger Pigmente enthält, insbesondere farbig ist. Zusätzlich oder stattdessen kann der Träger handelsübliche Füllstoffe enthalten. In der Regel ist der Träger jedoch farblos.

Die der Lackschicht zugewandte Seite/Oberfläche des Trägers ist in der Regel entweder strukturiert oder glatt ausgebildet. Im ersteren Fall überträgt sich die Struktur des Trägers beim Aufbringen einer Lackschicht auf dieselbe, was zur Herstellung mattierter oder effektgebender Lackierungen verwendet werden kann. Hierauf wird unten noch detailliert eingegangen.

Ein erfindungsgemäßer Lack ist sowohl durch Strahlung als auch thermisch härtbar. In bevorzugten Ausführungsformen eines erfindungsgemäßen Schichtverbunds ist die Lackschicht mindestens teilweise gehärtet, insbesondere thermisch vorgehärtet. Bei thermischer Härtung wird im Lack enthaltenes Lösungsmittel im wesentlichen vollständig entfernt. Darüber hinaus vernetzt vorliegend bei thermischer Härtung die OH-funktionelle Komponente A mit der doppelbindungshaltigen, NCO-funktionellen Komponente B.

Anschließend kann eine Strahlungshärtung erfolgen, wobei als einzusetzende Strahlung insbesondere UV-Strahlung bevorzugt ist. Auch der Einsatz von Elektronen-Strahlung ist möglich.

Die Lackschicht weist vorzugsweise eine Dicke zwischen 15 µm und 80 µm auf (nach vollständiger Härtung).

In bevorzugten Ausführungsformen weist ein erfindungsgemäßer Schichtverbund mindestens eine Schicht mit farb- und/oder effektgebenden Eigenschaften auf.

Bei dieser Schicht mit farb- und/oder effektgebenden Eigenschaften handelt es sich beispielsweise um eine Schicht aus einem Lack auf Wasserbasis. Grundsätzlich muss ein solcher geeigneter Lack, abhängig vom Verarbeitungsprozess, rakel-, gieß-, spritz- und/oder pumpfähig sein.

Besonders bevorzugt ist die mindestens eine Schicht mit farb- und/oder effektgebenden Eigenschaften eine Polyurethanschicht. Die Polyurethanschicht basiert insbesondere auf einem Bindemittel mit einem Festkörperanteil zwischen 25 Gew.-% und 55 Gew.-%.

Die farb- und/oder effektgebenden Eigenschaften können beispielsweise durch Pigmenten hervorgerufen werden. Geeignete Pigmente sind dem Fachmann bekannt.

Wie die Schicht aus dem erfindungsgemäßen Lack ist in bevorzugten Ausführungsformen eines erfindungsgemäßen Schichtverbunds auch die mindestens eine Schicht mit farb- und/oder effektgebenden Eigenschaften mindestens teilweise gehärtet, insbesondere zumindest thermisch vorgehärtet.

Die Schicht mit farb- und/oder effektgebenden Eigenschaften weist vorzugsweise eine Dicke zwischen 5 µm und 40 µm auf (nach vollständiger Härtung).

In bevorzugten Ausführungsformen weist ein erfindungsgemäßer Schichtverbund die folgende Schichtabfolge auf:
- Träger,
- mindestens eine Lackschicht aus einem erfindungsgemäßen Lack,
- mindestens eine Schicht mit farb- und/oder effektgebenden Eigenschaften.

In besonders bevorzugten Ausführungsformen weist ein erfindungsgemäßer Schichtverbund mindestens eine Schicht mit farb- und/oder effektgebenden Eigenschaften auf, die zudem Klebe- bzw. haftvermittelnde Eigenschaften hat, bei der es sich also auch um eine Haftschicht handelt.

In einer weiteren bevorzugten Ausführungsformen weist ein erfindungsgemäßer Schichtverbund die folgende Schichtabfolge auf:
- Träger,
- mindestens eine Schicht mit farb- und/oder effektgebenden Eigenschaften und
- mindestens eine Lackschicht aus einem erfindungsgemäßen Lack.

Ein solcher Schichtverbund ist insbesondere zur einseitigen Applikation vorgesehen, vorzugsweise auf der der aufgebrachten Schicht härtbaren Lackes abgewandten Seite des Trägers. Die Applikation erfolgt bevorzugt durch Verklebung oder Kaschieren aber auch durch Hinterspritzen oder Hinterschäumen.

Besonders bevorzugt ist der erfindungsgemäße Schichtverbund zur vollflächigen Applikation vorgesehen, es ist aber auch eine Aufbringung auf ein Substrat mittels stellenweiser Applikation möglich

Die Lackschicht aus dem erfindungsgemäßen Lack kann z.B. eine strukturierte oder eine glatte Oberfläche aufweisen. Im ersteren Fall weist sie eine matte Optik auf, im letzteren eher ein spiegelndes Erscheinungsbild.

Durch den niedrigen T_{g}-Wert der Komponenten eines erfindungsgemäßen Lackes kann grundsätzlich eine gewisse Anfälligkeit für Verunreinigungen, insbesondere für Staub, bestehen, zumindest wenn der Lack noch ungehärtet ist. Entsprechend kann ein erfindungsgemäßer Schichtverbund in einigen Ausführungsformen eine entfernbare Schutzschicht, vorzugsweise eine entfernbare Schutzfolie, auf der Lackschicht aus dem erfindungsgemäßen Lack aufweisen.

Wie die der Lackschicht zugewandte Seite/Oberfläche des Trägers (s.o.) kann auch die der Lackschicht zugewandte Seite/Oberfläche der Schutzschicht strukturiert oder glatt ausgebildet sein. Somit können über die Schutzschicht Strukturen auf die Lackoberfläche zu übertragen werden. Dazu kann auf der Schutzschicht ein entsprechendes Negativ- und/oder Positivmuster aufgearbeitet sein.

Auch bei der entfernbaren Schutzschicht kann es sich sowohl um eine einschichtige als auch um eine mehrschichtige Folie handeln.

Bevorzugt handelt es sich bei der entfernbaren Schutzschicht um eine Kunststoff-Folie, insbesondere um eine Folie auf Basis von Polyestern, Polyolefinen, Polycarbonaten, Acrylnitril-Butadien-Styrol (ABS), Acryl-Styrol-Acrylnitril (ASA), Acrylnitril-Butadien-Styrol/Polycarbonat (ABS/PC), Acryl-Styrol-Acrylnitril/Polycarbonat (ASA/PC), Polycarbonat/Polybutylenterephtalat (PC/PBT) oder anderen dem Fachmann bekannten geeigneten Kunststoffen oder Mischungen derselben. Besonders bevorzugt ist eine Schutzschicht auf Basis von Polyethylenterephtalat.

Unter Umständen ist aber auch der Einsatz von Schutzschichten aus anderen Materialien als Kunststoff wie z. B. aus Metall oder Papier, denkbar.

Vorzugsweise weist eine erfindungsgemäß verwendbare Schutzschicht eine Dicke zwischen 10 µm und 100 µm, insbesondere zwischen 20 µm und 60 µm, auf.

Wie der bereits beschriebene Träger kann in bevorzugten Ausführungsformen auch die Schutzschicht derart ausgestaltet sein, dass sie licht- und/oder UV-durchlässig ist.

Ein erfindungsgemäßer Lack ist in der Regel in gehärtetem Zustand nicht mehr klebrig. Nach endgültiger UV-Härtung hat die Oberfläche eines erfindungsgemäßen Lacks eine ausreichende Härte, so dass der erfindungsgemäße Schichtverbund sofort gewickelt werden kann. Der erfindungsgemäße Lack hat auch in ausgehärteter Form trotz hoher Oberflächenhärte eine hohe Dehnfähigkeit und und eine hohe Flexibilität. Die hohe Flexibilität ermöglicht einen Ummantelungsprozess von Profilen mit geringen Radien. Eine Prüfmethode für das Biegeverhalten ist z.B. der Dornbiegeversuch über Dornen mit abgestuften Dorndurchmesser. Oft werden beschichtete Profile gebogen, gestreckt, oder streckgebogen. Auch ein erfindungsgemäßer Schichtverbund muss diesen Vorgang aushalten. Eine Methode um dieses Verhalten zu beschreiben ist die Reissdehnung beim Zugversuch. Ein erfindungsgemäßer Schichtverbund weist vorzugsweise eine Reissdehnung von ca. 50 - 80 % auf, insbesondere abhängig von Schichtdicke, Träger und Substrat.

Auch die Verwendung eines erfindungsgemäßen Lacks oder eines erfindungsgemäßen Schichtverbunds zur Beschichtung eines Substrats ist von der vorliegenden Erfindung umfasst. Bei dem Substrat kann es sich beispielsweise um ein Substrat aus Kunststoff (z.B. PVC, PP, PC), Metall, Glas, Furnier, Schaum und/oder Holz handeln. Besonders bevorzugt handelt es sich bei dem Substrat um eine Fahrzeugkarosserie oder ein Teil davon oder ein Holz-, Kunststoff- oder Metallprofil für die Möbel-, Bau- oder Automobilindustrie. Auch zum Flächenkaschieren von Platten und Scheiben, insbesondere von Holzplatten für die Möbelindustrie, Fensterprofilen und Aluminiumteilen und -platten für den Fassadenbau lässt sich ein erfindungsgemäßer Lack oder ein erfindungsgemäßer Schichtverbund verwenden.

Auch ein Verfahren zum Aufbringen eines Lackes auf ein Substrat ist Gegenstand der vorliegenden Erfindung.

In einer ersten Ausführungsform ist ein erfindungsgemäßes Verfahren gekennzeichnet durch die Schritte
- Flächiges Inkontaktbringen der Lackschicht eines Schichtverbundes umfassend einen Träger und mindestens eine auf den Träger aufgebrachte Lackschicht, insbesondere eines erfindungsgemäßen Schichtverbundes mit einer Oberfläche eines Substrats,
- Abziehen des Trägers von der Lackschicht.

Besonders bevorzugt wird für diese Ausführungsform eines erfindungsgemäßen Verfahrens ein Schichtverbund mit der Schichtabfolge
- Träger,
   - mindestens eine Lackschicht aus einem erfindungsgemäßen Lack,
   - mindestens eine Schicht mit farb- und/oder effektgebenden Eigenschaften
verwendet.

Überraschenderweise wurden nämlich gefunden, dass sich der Träger eines erfindungsgemäßen Schichtverbundes von der darauf befindlichen Lackschicht lösen lässt, selbst wenn diese bereits thermisch und UVgehärtet ist, wobei eine qualitativ hochwertige Lackoberfläche entsteht. Der Träger bzw. die Trägerfolie eines erfindungsgemäßen Schichtverbundes dient in dieser Ausführungsform eines erfindungsgemäßen Verfahrens entsprechend nur als "Transfermedium", mittels dem ein erfindungsgemäßer Lack auf ein Substrat "transferiert" wird.

Es kann bevorzugt sein, vor dem Inkontaktbringen der Lackschicht mit dem Substrat eine Klebstoffschicht, insbesondere aus Polyurethan, auf das Substrat aufzubringen, insbesondere wenn ein erfindungsgemäßer Schichtverbund eingesetzt wird, der keine Schicht mit farb- und/oder effektgebenden Eigenschaften aufweist, die zugleich haftvermittelnde Eigenschaften aufweist.

Die Lackschicht eines erfindungsgemäßen Schichtverbunds kann sowohl vor als auch nach dem Aufbringen ausgehärtet werden.

Das Aushärten des Lackes erfolgt bevorzugt thermisch und/oder mittels Strahlung, insbesondere mittels UV-Strahlung.

Gegebenfalls wird der Lack durch den Träger hindurch bestrahlt. So ist es bevorzugt, den Träger erst nach der Aushärtung der Lackschicht abzuziehen.

Eine Strukturierung der Lackschicht kann problemlos beispielsweise mittels eines geeigneten Trägers erfolgen (s.o.).

In einer weiteren Ausführungsform ist ein erfindungsgemäßes Verfahren gekennzeichnet durch die Schritte
- Aufbringen einer Klebstoffschicht auf das Substrat
- Trägerseitiges Aufbringen eines erfindungsgemäßen Schichtverbundes auf das Substrat,
- Ggf. Abziehen einer Schutzschicht.

Diese Vorgehensweise ist insbesondere beim Flächenkaschieren von Platten und Scheiben, insbesondere von Holzplatten für die Möbelindustrie, und bei der Lackierung von Fensterprofilen bevorzugt. Die Trägerfolie wird in dieser Ausführungsform eines erfindungsgemäßen Verfahrens mit auf das Substrat transferiert und verbleibt auch dort.

Besonders bevorzugt wird für diese Ausführungsform eines erfindungsgemäßen Verfahrens ein Schichtverbund mit der Schichtabfolge
- Träger,
- mindestens eine Schicht mit farb- und/oder effektgebenden Eigenschaften und
- mindestens eine Lackschicht aus einem erfindungsgemäßen Lack.
verwendet.

Die mindestens eine Lackschicht aus einem erfindungsgemäßen Lack kann im Rahmen dieser Ausführungsform eines erfindungsgemäßen Verfahrens wahlweise unstrukturiert belassen oder strukturiert werden. Die Strukturierung kann im Rahmen eines erfindungsgemäßen Verfahrens beispielsweise mittels einer geeigneten Schutzfolie erfolgen (s.o.). Daneben ist aber auch eine alternative strukturgebende Behandlung, beispielsweise mittels eines Prägepapiers oder einer Prägewalze, denkbar. Eine Einstellung des Glanzgrades kann gezielt in Abhängigkeit des Grades und der Art der Strukturierung eingestellt werden.

Weitere Merkmale der Erfindung ergeben sich aus dem Beispiel in Verbindung mit den Unteransprüchen. Hierbei können einzelne Merkmale jeweils für sich oder zu mehreren in Kombination miteinander bei einer Ausführungsform der Erfindung verwirklicht sein. Die beschriebenen bevorzugten Ausführungsformen dienen lediglich zur Erläuterung und zum besseren Verständnis der Erfindung und sind in keiner Weise einschränkend zu verstehen.

### Beispiel

Ein erfindungsgemäßer Lack wurde durch Mischen der folgenden Bestandteile hergestellt:

| | |
|---|---|
| Komponente C: | 30 Gew.-% |
| Urethanacrylat Bindemittel (fest) mit Glasübergangstemperatur von 2 °C und Doppelbindungsdichte von 4 mol/kg | |
| Komponente A: | 10 Gew.-% |
| Polyol, doppelbindungshaltig, Bindemittel fest, OH-Gehalt 5,7 %, Doppelbindungsdichte von 3,5 mol/kg | |
| Irgacure 184 (Photoinitiator) | 1 Gew.-% |
| Irgacure 819 (Photoinitiator) | 0,40 Gew.-% |
| Tinuvin 400 (Lichtschutzmittel) | 0,70 Gew.-% |
| Tinuvin 292 (Lichtschutzmittel) | 0,70 Gew.-% |
| Tego Glide 435 (Oberflächenadditiv) | 2 Gew.-% |
| Byk 051 (Oberflächenadditiv) | 2 Gew.-% |
| Lösemittel | 23,2 Gew.-% |
| Komponente B: | 30 Gew.-% |
| Urethanacrylat, NCO-haltig. Bindemittel fest, NCO-Gehalt 5,4 %, Doppelbindungsdichte von 1,5 mol/kg | |

Die Lackzusammensetzung wurde anschließend auf eine 100 µm dicke Folie aus Polyethylenterephthalat aufgerakelt. Nach Trocknung bei Raumtemperatur und anschließender thermischer Härtung im Ofen bei 100 °C wurde 1 - 5 min bei 23 °C abgekühlt. Die Dicke der entstehenden Lackschicht betrug ca. 25 µm.

Auf ein Aluminium-Profil wurde eine dünne Polyurethan-Klebeschicht aufgebracht. Anschließend wurde die Folie aus Polyethylenterephthalat mit der darauf aufgebrachten Lackschicht lackseitig bei leichtem Druck auf das Profil aufgebracht. Nach einer UV-Härtung mit einem Hg-Kaltlichtstrahler (1000 bis 7000 mJ/cm²) ließ sich die Folie aus Polyethylenterephthalat problemlos von dem nun lackierten Aluminium-Profil abziehen.

## Patentansprüche

1. Lack, umfassend eine doppelbindungshaltige, OH-funktionelle Komponente A, eine doppelbindungshaltige, NCO-funktionelle Komponente B und eine doppelbindungshaltige Komponente C, mit den folgenden Eigenschaften:
Komponente A
- Festkörperanteil zwischen 30 Gew.-% und 100 Gew.-%,
- Doppelbindungsdichte zwischen 2 mol/kg und 5 mol/kg, insbesondere zwischen 3 mol/kg und 4 mol/kg (bei einem Festkörperanteil von 100 %) und
- OH-Gehalt zwischen 4 Gew.-% und 7 Gew.-%
Komponente B
- Festkörperanteil zwischen 30 Gew.-% und 100 Gew.-%,
- Doppelbindungsdichte zwischen 1 mol/kg und 4 mol/kg, insbesondere zwischen 1 mol/kg und 2 mol/kg (bei einem Festkörperanteil von 100 %) und
- NCO-Gehalt zwischen 4 Gew.-% und 7 Gew.-%
Komponente C
- Glasübergangstemperatur T_{g} zwischen -10 °C und 20 °C, insbesondere zwischen -5 °C und 5 °C,
- Festkörperanteil zwischen 30 Gew.-% und 100 Gew.-% und
- Doppelbindungsdichte zwischen 3 mol/kg und 6 mol/kg, insbesondere zwischen 4 mol/kg und 4,5 mol/kg (bei einem Festkörperanteil von 100 %)

2. Lack nach Anspruch 1, **dadurch gekennzeichnet, dass** es sich bei Komponente A um ein Bindemittel auf Basis eines doppelbindungshaltigen Polyols handelt.

3. Lack nach einem der vorhergehenden Ansprüche, **dadurch gekennzeichnet, dass** es sich bei Komponente B um ein aliphatisches Urethanacrylat handelt.

4. Gehärteter oder teilgehärteter Lack, hergestellt durch Härtung oder Teilhärtung eines Lacks nach einem der Ansprüche 1 bis 3.

5. Substrat, mindestens teilweise beschichtet mit einem Lack nach einem der vorhergehenden Ansprüche.

6. Flexibler Schichtverbund mit einem Träger und mindestens einer auf den Träger aufgebrachten Lackschicht aus einem Lack nach einem der Ansprüche 1 bis 4, wobei es sich bei dem Träger bevorzugt um eine Folie handelt und wobei die Lackschicht bevorzugt mindestens teilweise gehärtet ist.

7. Schichtverbund nach Anspruch 6, **dadurch gekennzeichnet, dass** er mindestens eine Schicht mit farb- und/oder effektgebenden Eigenschaften aufweist, die bevorzugt mindestens teilweise gehärtet ist.

8. Schichtverbund nach einem der Ansprüche 6 oder 7 mit folgender Schichtabfolge:
- Träger,
- mindestens eine Lackschicht aus einem Lack nach einem der Ansprüche 1 bis 4,
- mindestens eine Schicht mit farb- und/oder effektgebenden Eigenschaften.

9. Schichtverbund nach Anspruch 8, **dadurch gekennzeichnet, dass** die mindestens eine Schicht mit farb- und/oder effektgebenden Eigenschaften eine Haftschicht ist.

10. Schichtverbund nach einem der Ansprüche 6 oder 7 mit folgender Schichtabfolge:
- Träger,
- mindestens eine Schicht mit farb- und/oder effektgebenden Eigenschaften und
- mindestens eine Lackschicht aus einem Lack nach einem der Ansprüche 1 bis 4.

11. Verwendung eines Lacks oder eines Schichtverbunds nach einem der Ansprüche 1 bis 4 oder 6 bis 10 zur Beschichtung eines Substrats, insbesondere einer Fahrzeugkarosserie oder eines Teils davon oder eines Holz-, Kunststoff- oder Metallprofils für die Möbel-, Bau- oder Automobilindustrie.

12. Verfahren zum Aufbringen eines Lackes auf ein Substrat, **gekennzeichnet durch** die Schritte
- Flächiges Inkontaktbringen der Lackschicht eines Schichtverbundes nach einem der Ansprüche 6 bis 9 mit einer Oberfläche des Substrats,
- Abziehen des Trägers von der Lackschicht.

13. Verfahren nach Anspruch 12, **dadurch gekennzeichnet, dass** die Lackschicht vor und/oder nach dem Aufbringen ausgehärtet wird.

14. Verfahren zum Aufbringen eines Lackes auf ein Substrat, **gekennzeichnet durch** die Schritte
- Aufbringen einer Klebstoffschicht auf das Substrat
- Trägerseitiges Aufbringen eines Schichtverbundes nach Anspruch 10 auf das Substrat,
- Ggf. Abziehen einer Schutzschicht.

## Claims

1. A surface-coating material comprising a double-bond-containing, OH-functional component A, a double-bond-containing, NCO-functional component B, and a double-bond-containing component C, having the following properties:
Component A
- solids fraction between 30% and 100% by weight,
- double-bond density between 2 mol/kg and 5 mol/kg, more particularly between 3 mol/kg and 4 mol/kg (at a solids fraction of 100%), and
- OH content between 4% and 7% by weight,
Component B
- solids fraction between 30% and 100% by weight,
- double-bond density between 1 mol/kg and 4 mol/kg, more particularly between 1 mol/kg and 2 mol/kg (at a solids fraction of 100%), and
- NCO content between 4% and 7% by weight,
Component C
- glass transition temperature T_{g} between -10°C and 20°C, more particularly between -5°C and 5°C,
- solids fraction between 30% and 100% by weight, and
- double-bond density between 3 mol/kg and 6 mol/kg, more particularly between 4 mol/kg and 4.5 mol/kg (at a solids fraction of 100%).

2. The surface-coating material according to claim 1, **characterized in that** component A is a binder based on a double-bond-containing polyol.

3. The surface-coating material according to any of the preceding claims, **characterized in that** component B is an aliphatic urethane acrylate.

4. A cured or part-cured surface-coating material produced by curing or part-curing a surface-coating material according to any of claims 1 to 3.

5. A substrate at least partly coated with a surface-coating material according to any of the preceding claims.

6. A flexible laminate with a carrier and at least one layer of surface-coating material applied to the carrier and comprising a surface-coating material according to any of claims 1 to 4, wherein the carrier preferably is a film, and wherein the layer of surface-coating material preferably is at least partly cured.

7. The laminate according to claim 6, **characterized in that** it comprises at least one layer having color-imparting and/or effect-imparting properties, said layer preferably being at least partly cured.

8. The laminate according to any of claims 6 or 7, having the following layer sequence:
- carrier,
- at least one surface-coating material layer made of a surface-coating material according to any of claims 1 to 4,
- at least one layer having color-imparting and/or effect-imparting properties.

9. The laminate according to claim 8, **characterized in that** the at least one layer having color-imparting and/or effect-imparting properties is an adhesion layer.

10. The laminate according to any of claims 6 or 7, having the following layer sequence:
- carrier,
- at least one layer having color-imparting and/or effect-imparting properties, and
- at least one surface-coating material layer made of a surface-coating material according to any of claims 1 to 4.

11. The use of a surface-coating material or of a laminate according to any of claims 1 to 4 or 6 to 10 for coating a substrate, in particular a vehicle body or a part thereof, or a wooden, plastic or metal profile for the furniture, construction or automobile industry.

12. A method of applying a surface-coating material to a substrate, **characterized by** the steps of
- all over contacting the layer of surface-coating material of a laminate according to any of claims 6 to 9 with a surface of the substrate,
- removing the carrier from the layer of surface-coating material.

13. The method according to claim 12, **characterized in that** the layer of surface-coating material is cured prior to and/or after application.

14. A method of applying a surface-coating material to a substrate, **characterized by** the steps of
- applying a layer of adhesive to the substrate,
- applying, on the carrier side, a laminate according to claim 10 to the substrate,
- removing a protective layer, where necessary.

## Revendications

1. Vernis comprenant un composant A contenant des doubles liaisons, fonctionnel OH, un composant B contenant des doubles liaisons, fonctionnel NCO, et un composant C contenant des doubles liaisons, présentant les caractéristiques suivantes :
Composant A
- part en solides comprise entre 30 % en poids et 100 % en poids,
- densité de doubles liaisons comprise entre 2 mol/kg et 5 mol/kg, en particulier entre 3 mol/kg et 4 mol/kg (pour une part en solides de 100 %) et
- teneur en OH comprise entre 4 % en poids et 7 % en poids,
Composant B
- part en solides comprise entre 30 % en poids et 100 % en poids,
- densité de doubles liaisons comprise entre 1 mol/kg et 4 mol/kg, en particulier entre 1 mol/kg et 2 mol/kg (pour une part en solides de 100 %) et
- teneur en NCO comprise entre 4 % en poids et 7 % en poids,
Composant C
- température de transition vitreuse T_{g} comprise entre -10 °C et 20 °C, en particulier entre -5 °C et 5 °C,
- part en solides comprise entre 30 % en poids et 100 % en poids et
- densité de doubles liaisons comprise entre 3 mol/kg et 6 mol/kg, en particulier entre 4 mol/kg et 4,5 mol/kg (pour une part en solides de 100 %).

2. Vernis selon la revendication 1, **caractérisé en ce que** le composant A est un liant à base d'un polyol contenant des doubles liaisons.

3. Vernis selon l'une des revendications précédentes, **caractérisé en ce que** le composant B est un acrylate d'uréthane aliphatique.

4. Vernis durci ou partiellement durci, obtenu par durcissement ou par durcissement partiel d'un vernis selon l'une des revendications 1 à 3.

5. Substrat revêtu au moins partiellement avec un vernis selon l'une des revendications précédentes.

6. Composite stratifié souple présentant un support et au moins une couche de vernis appliquée sur le support et constituée d'un vernis selon l'une des revendications 1 à 4, sachant que de préférence le support est un film mince et que la couche de vernis est de préférence durcie au moins partiellement.

7. Composite stratifié selon la revendication 6, **caractérisé en ce qu'**il présente au moins une couche avec des propriétés conférant de la couleur et/ou de l'effet et qui est de préférence durcie au moins partiellement.

8. Composite stratifié selon l'une des revendications 6 ou 7, présentant la succession de couches suivante :
- support,
- au moins une couche de vernis constituée d'un vernis selon l'une des revendications 1 à 4,
- au moins une couche avec des propriétés conférant de la couleur et/ou de l'effet.

9. Composite stratifié selon la revendication 8, **caractérisé en ce que** l'au moins une couche avec des propriétés conférant de la couleur et/ou de l'effet est une couche adhésive.

10. Composite stratifié selon l'une des revendications 6 ou 7, présentant la succession de couches suivante :
- support,
- au moins une couche avec des propriétés conférant de la couleur et/ou de l'effet, et
- au moins une couche de vernis constituée d'un vernis selon l'une des revendications 1 à 4.

11. Mise en oeuvre d'un vernis ou d'un composite stratifié selon l'une des revendications 1 à 4 ou 6 à 10, pour revêtir un substrat, en particulier une carrosserie de véhicule ou une partie d'une telle carrosserie, ou un profilé en bois, en plastique ou en métal destiné à l'industrie de l'ameublement, du bâtiment ou de l'automobile.

12. Procédé destiné à appliquer un vernis sur un substrat, **caractérisé par** les étapes
- mise en contact surfacique de la couche de vernis d'un composite stratifié selon l'une des revendications 6 à 9 avec une surface du substrat,
- retrait du support de la couche de vernis.

13. Procédé selon la revendication 12, **caractérisé en ce que** la couche de vernis est durcie avant et/ou après l'application.

14. Procédé destiné à appliquer un vernis sur un substrat, **caractérisé par** les étapes
- application d'une couche de colle sur le substrat,
- application sur le substrat côté support d'un composite stratifié selon la revendication 10,
- retrait d'une couche protectrice le cas échéant.
